# EUROPÄISCHE PATENTSCHRIFT

(11) **EP 2 679 910 B1**
(45) Veröffentlichungstag und Bekanntmachung des Hinweises auf die Patenterteilung: **23.01.2019**
(21) Anmeldenummer: 13172240.7
(22) Anmeldetag: 17.06.2013
(51) Int. Cl.: F24C 7/08, G08C 17/04, H02J 5/00, H05B 6/12, H02J 50/10

(54) **Haushaltsgerät mit Bedineeinrichtung**
domestic appliance wtih operating device
appareil ménager avec un dispositif de commande

(30) Priorität: 26.06.2012 DE 102012210846
(43) Veröffentlichungstag der Anmeldung: 01.01.2014
(73) Patentinhaber: BSH Hausgeräte GmbH, 81739 München (DE)
(72) Erfinder: Beifuss, Wolfgang, 83339 Chieming (DE); Has, Uwe, 84579 Unterneukirchen (DE)

(56) Entgegenhaltungen:
- EP-A2- 1 347 242
- WO-A1-2011/032047
- WO-A2-2007/107888
- WO-A2-2008/003572
- DE-A1-102009 027 903
- DE-A1-102010 028 508

## Beschreibung

Die Erfindung betrifft eine Anordnung, umfassend ein Haushaltsgerät und eine Bedieneinrichtung für mindestens dieses Haushaltsgerät, wobei die Bedieneinrichtung mindestens ein induktiv versorgbares Bedienteil aufweist, das Bedienteil auf einer Aufsatzfläche variabel positionierbar ist, zwischen dem Bedienteil und dem Haushaltsgerät eine Datenübertragung durchführbar ist, das Haushaltsgerät mittels der Bedieneinrichtung bedienbar ist und zwischen der Versorgungseinheit und dem mindestens einen Bedienteil eine Datenübertragung auf der Grundlage einer Nahfeld-Funkübertragung durchführbar ist.

Eine bekannte Bedieneinrichtung weist eine induktive Versorgungseinheit auf, die in eine randseitige Bedienblende eines Kochfelds integriert ist, wobei ein abnehmbares Bedienteil auf eine Aufsatzfläche in der Bedienblende lokal definiert aufsetzbar ist.

DE 10 2010 028 508 A1 offenbart eine betreffende Anordnung. Die Anordnung weist ein Bedienteil ist für eine Haushaltsarbeitsstation auf, wobei das Bedienteil mindestens eine Anzeigeeinheit und mindestens eine Bedieneinheit für eine Bedienung der Haushaltsarbeitsstation aufweist, wobei das Bedienteil zu seinem Betrieb auf die Haushaltsarbeitsstation aufsetzbar ist und da-durch mit der Haushaltsarbeitsstation transformatorisch koppelbar ist und wobei das Bedienteil mindestens eine drahtlose Datenschnittstelle zur Kommunikation mit der Haushaltsarbeitsstation aufweist. Die Haushaltsar-beitsstation ist mit mehreren transformatorisch arbeiten-den Basisstationen ausgestattet, wobei die Haushaltsarbeitsstation bedienteilfrei ist, mindestens eine drahtlose Datenschnittstelle zur Kommunikation mit dem Bedienteil aufweist, mit einer Aufsatzgeräteerkennung ausgestattet ist und die Basisstationen nur bei einem Vorhandensein eines zu seinem Betrieb auf eine der Basisstationen aufgesetzten Bedienteils aktivierbar ist.

EP 1 347 242 A2 offenbart eine Bedienvorrichtung für ein Elektrogerät, wobei eine Bedienvorrichtung für ein Glaskeramikkochfeld mit einer Bedieneinheit geschaffen wird. Die Bedieneinheit kann abgenommen werden.

WO 2008/003572 A2 offenbart eine Bedieneinheit zur Anzeige und/oder Einstellung von Werten von zumindest einem Betriebsparameter von zumindest einem Hausgerät, welche Bedieneinheit als eine von einem Hausgerät separierbare Einheit ausgebildet ist und an zumindest zwei Hausgeräten anbringbar ist, wobei die Einstellung und/oder Überwachung von Betriebsparametern eines Hausgeräts unabhängig davon durchführbar ist, an welchem Hausgerät die Bedieneinheit angeordnet ist. Die Energieversorgung der Bedieneinheit und/oder die Informationsübertragung zwischen der Bedieneinheit und dem Hausgerät, an dem die Bedieneinheit angeordnet ist, ist drahtlos durchführbar. Die Bedieneinheit ist zur induktiven Energieversorgung ausgebildet.

DE 10 2009 027 903 A1 offenbart ein Kochfeld. Das Kochfeld weist mindestens eine Kochplatte, mindestens eine unterhalb der Kochplatte angeordnete Niedrigenergie-Übertragungseinheit zum drahtlosen Übertragen von Energie durch die Kochplatte und mindestens einen auf die Kochplatte aufsetzbaren elektrisch betreibbaren Niedrigenergieabnehmer auf, wobei eine Aufsatzposition auf der Kochplatte zum Aufsatz des Niedrigenergieabnehmers vorgesehen ist. Der elektrisch betreibbare Niedrigenergieabnehmer weist eine Abnehmerspule auf, die größer ist als mindestens eine Erregerspule der Niedrigenergie-Übertragungseinheit, insbesondere mindestens doppelt so groß.

Es ist die **Aufgabe** der vorliegenden Erfindung, eine verbesserte Bedienbarkeit eines Haushaltsgeräts bereitzustellen.

Diese Aufgabe wird gemäß den Merkmalen des unabhängigen Anspruchs gelöst. Bevorzugte Ausführungsformen sind insbesondere den abhängigen Ansprüchen entnehmbar.

Die Aufgabe wird gelöst mittels einer Anordnung, umfassend ein Haushaltsgerät und eine Bedieneinrichtung für mindestens dieses Haushaltsgerät, wobei die Bedieneinrichtung mindestens ein induktiv versorgbares Bedienteil aufweist, das Bedienteil auf einer Aufsatzfläche variabel positionierbar ist, zwischen dem Bedienteil und dem Haushaltsgerät eine Datenübertragung durchführbar ist, das Haushaltsgerät mittels der Bedieneinrichtung bedienbar ist und zwischen der Versorgungseinheit und dem mindestens einen Bedienteil eine Datenübertragung auf der Grundlage einer Nahfeld-Funkübertragung durchführbar ist, wobei die Bedieneinrichtung eine zu dem Haushaltsgerät entfernt anordenbare induktive Versorgungseinheit mit der Aufsatzfläche für das mindestens eine Bedienteil aufweist, wobei das Bedienteil mittels der Versorgungseinheit durch induktiven Energieübertrag versorgbar ist, wenn es auf der Aufsatzfläche aufgesetzt ist, und zwischen der Versorgungseinheit und dem Haushaltsgerät eine Datenübertragung auf der Grundlage einer Nahfeld-Funkübertragung durchführbar ist.

Die induktive Versorgungseinheit weist dazu insbesondere mindestens eine Primärspule oder Erregerspule auf, und die Bedieneinrichtung weist insbesondere mindestens eine Sekundärspule oder Abnehmerspule auf, welche mit der mindestens einen Primärspule transformatorisch koppelbar ist. Die Versorgungseinheit weist bevorzugt eine Steuereinrichtung zur Steuerung oder Regelung der mindestens einen Spule auf.

Durch die Möglichkeit, die Versorgungseinheit entfernt von dem durch das Bedienteil zu bedienenden Haushaltsgerät anzuordnen, wird der Vorteil erreicht, dass ein primäres Funktionsfeld des Haushaltsgeräts (z.B. ein Kochfeld eines Kochgeräts) vergrößert werden kann. Die Versorgungseinheit kann insbesondere in einem definierten maximalen Abstand von dem Haushaltsgerät angeordnet sein, z.B. von bis zu einem Meter, so dass eine bequeme Bedienung des Haushaltsgeräts insbesondere bei einem auf der Aufsatzfläche der Versorgungseinheit abgesetzten Bedienteil ermöglicht wird.

Ferner ist das (abnehmbare) Bedienteil auf der Aufsatzfläche variabel positionierbar bzw. aufsetzbar. Die Aufsatzfläche (auf welcher ein induktiver oder transformatorischer Energieübertrag stattfinden kann) ist also insbesondere größer als die Kontaktfläche des Bedienteils. Dies ergibt den Vorteil, dass das Bedienteil einfacher auf die Aufsatzfläche der Versorgungseinheit aufsetzbar oder abstellbar ist und zudem örtlich flexibler positionierbar ist. Die örtlich flexiblere Positionierbarkeit ist besonders ausgeprägt, wenn die Aufsatzfläche der Versorgungseinheit ein Vielfaches größer ist als die Kontaktfläche des Bedienteils. Da das Bedienteil also auch von der Aufsatzfläche abnehmbar ist, kann es so verstaut werden, so dass die Bedieneinrichtung sehr kindersicher ist.

Dass eine Datenübertragung zwischen der Versorgungseinheit und dem mindestens einen Bedienteil mittels einer Nahfeld-Funkübertragung durchführbar ist, kann in anderen Worten bedeuten, dass die Versorgungseinheit und das mindestens eine Bedienteil für eine Datenübertragung zwischen sich eingerichtet sind. Eine solche Datenübertragung weist den Vorteil auf, dass eine Abstimmung zwischen der Versorgungseinheit und dem mindestens einen Bedienteil durchführbar ist, beispielsweise dadurch eine Energieversorgung des Bedienteils verbessert werden kann. Beispielsweise kann eine Empfangsqualität oder ein Empfangspegel des Bedienteils an die Versorgungseinheit gemeldet werden, welche daraufhin z.B. eine Signalamplitude verstärken kann oder ihre Anregungsfrequenz ändern kann, um eine resonante Kopplung zu verstärken. Es ist eine Weiterbildung, dass das Bedienteil der Versorgungseinheit seine angeschalteten elektrischen Verbraucher oder deren Soll- oder Mindestlast meldet, so dass ein Signalpegel der Versorgungseinheit daran anpassbar ist.

Die Nahfeld-Funkübertragung ergibt den weiteren Vorteil, dass dadurch eine weitgehend störungsfreie Bedienung des Haushaltsgeräts mit einer so beschränkten Reichweite bereitgestellt werden, dass ein Bediener sich in unmittelbarer Nähe zu dem zu bedienenden Haushaltsgerät befinden muss, um dieses über das Bedienteil zu manipulieren. So wird verhindert, dass das Haushaltsgerät unbeaufsichtigt manipulierbar ist.

Dass die Datenübertragung zwischen der Versorgungseinheit und dem Haushaltsgerät durchführbar ist, kann in anderen Worten bedeuten, dass die Versorgungseinheit und das Haushaltsgerät für eine Datenübertragung zwischen sich eingerichtet sind. Eine solche Datenübertragung kann vorteilhafterweise zur Bereitstellung eines Sicherheitsmerkmals dienen. So mag z.B. das Haushaltsgerät nur dann Befehle usw. von dem Bedienteil annehmen, wenn gleichzeitig die Versorgungseinheit ihre Anwesenheit und ggf. Aktivierung anzeigt.

Unter einer Nahfeld-Funkübertragung kann insbesondere eine Funkübertragung verstanden werden, welche maximal in einem Zentimeterbereich durchführbar ist, insbesondere von nicht mehr als ca. einem Meter, insbesondere von nicht mehr als fünfzig Zentimetern, insbesondere von nicht mehr als zehn Zentimetern, insbesondere von nicht mehr als fünf Zentimetern, insbesondere von nicht mehr als vier Zentimetern. Durch die Verwendung einer Funkübertragung wird erstens die Datenübertragung von der induktiven Energieübertragung entkoppelt, was eine besonders störungsfreie Datenübertragung ermöglicht. Durch die kurze Reichweite der Datenübertragung wird zudem vorteilhafterweise die Wahrscheinlichkeit verringert, dass die Datenkommunikation andere Datenübertragungen stören kann.

Die Datenübertragung kann unidirektional oder bidirektional eingerichtet sein. Eine Anwendung einer bidirektionalen Datenübertragung mag z.B. eine Übertragung von Steuerbefehlen von dem Bedienteil auf das Haushaltsgerät und eine Übertragung von Statusmeldungen auf das Bedienteil umfassen. Das Bedienteil kann insbesondere zur Darstellung der Statusmeldungen oder einer zugehörigen Statusinformation eine Anzeigeeinheit aufweisen.

Insbesondere mag das Haushaltsgerät mindestens einen entsprechenden Nahfeld-Funkempfänger oder Nahfeld-Funksenderempfänger (Transceiver) aufweisen und mindestens ein Bedienteil mag mindestens einen damit kommunikativ koppelbaren Funksender oder Nahfeld-Funksenderempfänger (Transceiver) aufweisen.

Grundsätzlich kann die Versorgungseinheit mit nur einer Spule ausgerüstet sein, was eine besonders preiswerte und einfach betreibbare Versorgungseinheit ermöglicht. Es ist eine für eine effektive induktive oder transformatorische Kopplung und damit auch Signalübertragung (Energie- und/oder Datenübertragung) bevorzugte Ausgestaltung, dass die Versorgungseinheit mehrere, insbesondere unterhalb der Aufsatzfläche angeordnete, Spulen aufweist. Diese können insbesondere individuell aktiviert werden, falls an ihnen eine Last abgegriffen wird ("Aufsatzerkennung").

Es ist für einen individuellen Betrieb der Spulen, insbesondere des Spulenfelds, allgemein vorteilhaft, dass mittels der Versorgungseinheit eine Aufsatzerkennung durchführbar ist, also insbesondere erkannt werden kann, welche der Spulen eine (effektive) induktive Kopplung mit einem jeweiligen Bedienteil durchführen können. Dies ermöglicht eine effektive Signalübertragung bei geringer Energie. Die Aufsatzerkennung mag z.B. anhand einer charakteristischen, definierten Last oder Lastmodulation des Bedienteils erkannt werden.

Es ist für eine effektive induktive Kopplung besonders bevorzugte Ausgestaltung, dass die Versorgungseinheit ein Spulenfeld aufweist, d.h. ein Feld aus mehreren dicht angeordneten Spulen. Die Spulen können insbesondere in einer dichtesten Packung angeordnet sein, z.B. einer quadratisch oder hexagonal dichtesten Packung. Die Spulen sind insbesondere kleine Spulen. Mittels dieser Ausgestaltung wird auch eine über die Aufsatzfläche gleichmäßigere Feldverteilung ermöglicht als bei einer Spule oder mehreren signifikant beabstandeten Spulen. Zudem können die Spulen dann bei mehreren auf der Aufsatzfläche angelegten Bedienteilen individuell auf das jeweils mit ihnen gekoppelte Bedienteil abgestimmt betrieben werden.

Es ist eine für eine besonders gleichmäßige Feldverteilung bevorzugte Ausgestaltung, dass zumindest zwei Spulen zueinander überlappend angeordnet sind.

Es ist noch eine weitere Ausgestaltung, dass eine induktive Versorgung des mindestens einen Bedienteils mittels eines Pulsbetriebs mindestens einer in der Versorgungseinheit vorhandenen Spule durchführbar ist. Das Bedienteil mag für seinen kontinuierlichen Betrieb mit mindestens einem Energiespeicher ausgerüstet sein, welcher das Bedienteil zwischen zwei Pulsen betreibbar hält. Ein solcher Energiespeicher mag insbesondere ein wartungsfreier Energiespeicher wie ein Superkondensator oder Ultrakondensator sein, aber auch eine Batterie oder ein schnellansprechender Akkumulator. Diese Ausgestaltung mag besonders energiesparend sein und funktechnisch besonders wenig störend.

Es ist eine weitere Ausgestaltung, dass eine induktive Versorgung des mindestens einen Bedienteils mittels eines Dauerbetriebs mindestens einer in der Versorgungseinheit vorhandenen Spule durchführbar ist. Das Bedienteil wird also dauernd gespeist. In diesem Fall kann auf den Energiespeicher in dem Bedienteil verzichtet werden. Dadurch wiederum wird eine Lebensdauer des Bedienteils verlängert (da z.B. Batterien und Akkumulatoren typischerweise nicht wartungsfrei sind) und seine Kosten sind verringerbar.
Für eine Wartungsfreiheit mag es eine allgemeine Ausgestaltung sein, dass das Bedienteil batterielos und akkumulatorlos ist. Insbesondere in diesem Fall mag das Bedienteil kein während eines Betriebs tragbares Bedienteil sein, sondern ein Aufsatzteil sein, das praktisch nur im aufgesetzten Zustand bedienbar ist.

Insbesondere mag die Versorgungseinheit mindestens einen entsprechenden Nahfeld-Funkempfänger oder Nahfeld-Funksenderempfänger (Transceiver) aufweisen, und mindestens ein Bedienteil mag mindestens einen kommunikativ koppelbaren Funksender oder Nahfeld-Funksenderempfänger (Transceiver) aufweisen.

Es ist eine Weiterbildung, dass die Nahfeld-Funkübertragung eine NFC-Datenübertragung ist. Unter einer NFC-Datenübertragung ("Near Field Communication") kann insbesondere die Datenübertragung gemäß dem NFC-Standard, insbesondere nach ISO-Normen, verstanden werden. Die maximale Reichweite der NFC-Datenübertragung beträgt insbesondere bis zu vier Zentimetern.

Insbesondere mag das Haushaltsgerät mindestens einen entsprechenden Nahfeld-Funkempfänger oder Nahfeld-Funksenderempfänger (Transceiver) aufweisen und mindestens ein Bedienteil mag mindestens einen damit kommunikativ koppelbaren Funksender oder Nahfeld-Funksenderempfänger (Transceiver) aufweisen.

Es ist auch hierfür eine Weiterbildung, dass die Nahfeld-Funkübertragung eine NFC-Datenübertragung ist. Aufgrund der maximalen Reichweite der NFC-Datenübertragung von vier Zentimetern ist eine Anwesenheit des Bedieners direkt an dem Haushaltsgerät erforderlich, beispielsweise im Gegensatz zu einer herkömmlichen Fernbedienung.

Es ist eine Weiterbildung, dass die Versorgungseinheit an einer Arbeitsplatte (z.B. aus Holz oder Kunststoff) angeordnet ist, insbesondere in eine Arbeitsplatte eingesetzt oder eingelassen ist. Dadurch kann die Arbeitsplatte weiter als solche verwendet werden und das mindestens eine Bedienteil bei Bedarf darauf betrieben werden. Die Arbeitsplatte bzw. die Versorgungseinheit mag sich insbesondere unmittelbar neben oder in einem geringen Abstand neben dem zu bedienenden Haushaltsgerät befinden.

Insbesondere mag die Versorgungseinheit mindestens einen entsprechenden Nahfeld-Funkempfänger oder Nahfeld-Funksenderempfänger (Transceiver) aufweisen, und das Haushaltsgerät mag mindestens einen damit kommunikativ koppelbaren Funksender oder Nahfeld-Funksenderempfänger (Transceiver) aufweisen.

Es ist eine Weiterbildung, dass die Nahfeld-Funkübertragung eine NFC-Datenübertragung ist. Dies begrenzt praktisch eine Entfernung der Versorgungseinheit von dem Haushaltsgerät unter ihrem Betrieb.
Es ist also insbesondere möglich, dass das Bedienteil, die Versorgungseinheit und das Haushaltsgerät untereinander über Nahfeld-Funkverbindung(en), insbesondere die NFC-Datenübertragungsmethode, miteinander kommunizieren, so dass deren enge räumliche Anordnung zueinander gewährleistet ist. Dies ist insbesondere vorteilhaft für Kochgeräte, bei denen eine Fernbedienung ohne Beaufsichtigung des Kochgeräts unterbunden sein sollte. Jedoch können insbesondere für andere Haushaltsgeräte (z.B. Kühlschrank, Wäschebehandlungsgerät usw.) auch weiter reichende Kommunikationsmethoden verwendet werden. Beispielsweise mögen auf einer Aufsatzfläche der Versorgungseinheit ein Bedienteil mit kurzreichweitiger Kommunikation für ein Kochgerät und ein Bedienteil für ein anderes Haushaltsgerät mit einer Bluetooth-Kommunikationseinrichtung (z.B. mit einer maximalen Reichweite von zehn Metern) gemeinsam betrieben werden.

Die Kommunikation zwischen unterschiedlichen Paarungen von Einheiten mag insbesondere auf unterschiedlichen logischen und/oder physikalischen Kanälen stattfinden.

Es ist eine Weiterbildung, dass das Induktionskochgerät das Haushaltsgerät ein Induktionskochgerät ist, das ein Spulenfeld (vergleichsweise kleiner) eng angeordneter Induktoren aufweist, insbesondere dichtgepackter, insbesondere dichtestgepackter Induktoren. Auf einem Kochfeld eines solchen Induktionskochgeräts ist Kochgeschirr frei positionierbar. Dies ermöglicht eine besonders flexible Anordnung von Kochgeschirr. Bei einem herkömmlichen Induktionskochgerät mag die Aufsatzfläche insbesondere auf die einzelnen Kochzonen beschränkt sein.

Es ist noch eine Weiterbildung, dass ein Aufsatz des Bedienteils auf das Kochfeld durch das Induktionskochgerät erkennbar ist (z.B. aufgrund einer Datenübertragung oder Lasterkennung) und das Bedienteil angepasst speisbar oder versorgbar ist, insbesondere mit einer reduzierten Leistung (z.B. von bis zu 5 Watt im Gegensatz zu bis zu mehreren kW zum Betreiben eines Kochgeschirrs).

Es ist zur einfacheren Feineinstellung der Leistung vorteilhaft, wenn das Bedienteil auf eine Warmhaltezone des Induktionskochgeräts aufsetzbar ist, welche im Vergleich zu anderen Kochzonen bereits über eine reduzierte Leistungsabgabe verfügt.

Es ist auch eine Weiterbildung, dass eine induktive oder transformatorische Versorgung des mindestens einen Bedienteils mittels eines Pulsbetriebs mindestens einer der Spulen des Kochfelds durchführbar ist, indem ein Suchpuls (bzw. eine Serie solcher Suchpulse der mindestens einen Spule zur Energieversorgung verwendet wird. Ein Suchpuls kann insbesondere von einem herkömmlichen (Induktions-)Kochfeld ausgesandt werden, um eine Anwesenheit einer induktiven Last festzustellen. Suchpulse können insbesondere in kurzen Abständen im Bereich von Sekunden (ca. einer Sekunde bis hin zu mehreren Sekunden) ausgesandt werden. Eine Dauer kann beispielsweise im Bereich einiger zehn Millisekunden liegen. Falls die Induktor(en) nicht belastet sind (also die Kochstelle(n) nicht belegt sind, wobei eine "Fehlbelegung" ggf. erkennbar ist), bleibt es bei einem Suchbetrieb mit Suchpulsen.

Es ist außerdem eine Weiterbildung, dass bei einer Erkennung eines Bedienteils an dem Kochfeld in einen Betriebszustand umgeschaltet wird, bei dem die Zahl, Dauer und/oder Höhe der Pulse erhöht wird, um eine induktive Signalübertragung (von Energie und/oder Daten) zu verstärken.

In den Pulspausen kann der Betrieb des Bedienteils z.B. durch einen geeigneten Energiespeicher sichergestellt werden.

Es ist eine alternative Weiterbildung, dass bei einer Erkennung eines Bedienteils an dem Kochfeld mindestens eine damit induktiv gekoppelte oder belegte Spule in einen Dauerbetrieb geschaltet wird.

Insbesondere für den Fall, dass das Haushaltsgerät ein Induktionskochgerät ist und die Aufsatzfläche eine Kochfeldplatte ist, ist es eine Ausgestaltung, dass das Bedienteil eine Temperatursensorik aufweist. So kann das Bedienteil feststellen, ob es auf eine freie, aber noch heiße Kochzone (beispielsweise mit einer hohen Restwärme) o.ä. aufgesetzt worden ist. Das Bedienteil mag folgend eine Aktion ausführen, z.B. ein optisches und/oder akustisches Warnsignal ausgeben oder ein Steuersignal an das Haushaltsgerät ausgeben, damit dieses ein optisches und/oder akustisches Warnsignal o.ä. ausgibt. Bei einer freien Positionierbarkeit des Bedienteils ist dies für alle koppelbaren Induktoren durchführbar.

Die Bestimmung der Restwärme kann beispielsweise so erfolgen, dass aus mindestens einem Messwert eines für jeden der Induktoren vorhandenen Temperaturfühlers sowie aus einer Nutzungsdauer des mindestens einen Induktors (ggf. zusammen mit einer gewählten Kochstufe) auf eine aktuelle Temperatur einer das Kochfeld nach oben abschließenden Kochfeldplatte (z.B. Glaskeramikplatte) rückschließbar ist.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1: skizziert in Draufsicht eine Anordnung mit einem Kochgerät und einer Bedieneinrichtung für das Kochgerät mit einem Bedienteil und einer Versorgungseinheit;
- Fig.2: skizziert in Draufsicht eine Anordnung von Primärspulen der Versorgungseinheit; und
- Fig.3: skizziert in Draufsicht eine Anordnung mit einem Kochgerät, einer darin integrierten Versorgungseinheit und einer darauf aufgelegten Bedieneinrichtung.

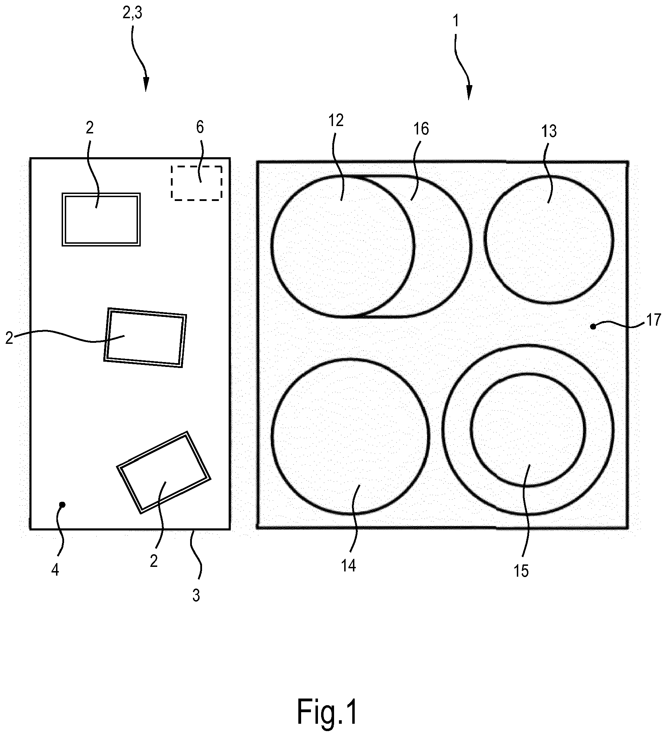

**Fig.1** zeigt in Draufsicht eine Anordnung mit einem Haushaltsgerät in Form einer Kochmulde oder Kochgeräts 1 und einer Bedieneinrichtung 2, 3 für das Kochgerät 1 mit einem Bedienteil 2 und einer Versorgungseinheit 3 für das Bedienteil 2. Die Versorgungseinheit 3 ist von dem Kochgerät 1 entfernt angeordnet, z.B. auf, in oder unter einer an das Kochgerät 1 angrenzenden Arbeitsplatte aus Kunststoff oder Holz. Das Bedienteil 2 ist auf eine Aufsatzfläche 4 der Versorgungseinheit 3 aufsetzbar, im Falle einer in oder unter der Arbeitsplatte angeordneten Versorgungseinheit auf die Arbeitsplatte.

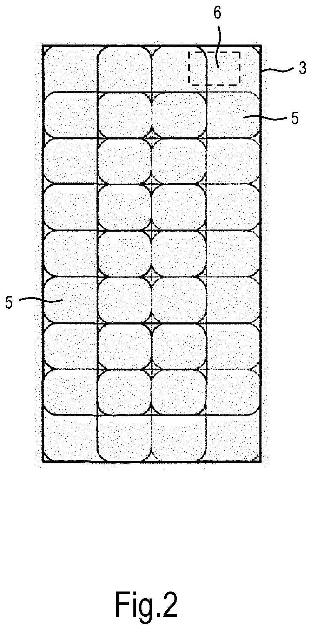

Die Versorgungseinheit 3 weist mehrere unterhalb der Aufsatzfläche 4 angeordnete Spulen 5 mit einer hier rechteckigen Grundform mit abgerundeten Ecken, welche in einem Feld mit einem quadratischen Muster dichtgepackt angeordnet sind und insbesondere unmittelbar (ohne Abstand) aneinander angrenzen, wie in **Fig.2** gezeigt. Bei einer geeigneten Bestromung der Spulen 5 können diese ein (elektro)magnetisches Wechselfeld an der Auflagefläche 4 erzeugen, welches durch ein oder mehrere in dem Bedienteil 2 vorhandene Sekundärspulen (o.Abb.) abgreifbar ist. Die Versorgungseinheit 3 ist also eine induktive Versorgungseinheit 3 und das Bedienteil 2 ist ein induktiv versorgbares Bedienteil, wobei die Versorgungseinheit 3 und das Bedienteil 2 induktiv oder transformatorisch koppelbar sind. Die Spulen 5 können sich überlappen, um ausgeprägte Feldminima zu vermeiden.

Da die Spulen 5 in einem dichtgepackten Feld angeordnet sind, kann das Bedienteil 2, dessen Kontaktfläche oder Fußfläche kleiner ist als die Aufsatzfläche 4, auf der Aufsatzfläche 4 variabel positioniert werden, wie in Fig.1 für drei unterschiedliche Stellungen gezeigt ist.

Die Versorgungseinheit 3 umfasst eine Aufsatzerkennung für das Bedienteil 2. Die Aufsatzerkennung kann beispielsweise dadurch erfolgen, dass eine charakteristische Last oder Lastmodulation des Bedienteils 2 erkannt wird. Alternativ mag das Bedienteil 2 eine Kennung und/oder andere zur Erkennung mögliche Daten als Datennachricht übermitteln, z.B. über eine Funkverbindung. Mit einer Aufsatzerkennung kann die Versorgungseinheit, z.B. mittels einer zugehörigen Steuereinrichtung 6, diejenigen Spulen 5 aktivieren, welche zur effektiven transformatorischen Kopplung mit dem erkannten Bedienteil 2 geeignet sind. Die Steuereinrichtung 6 dient allgemein dem Betrieb der Versorgungseinheit 3, z.B. zur Aufsatzerkennung, Ansteuerung der Spulen 5, Datenverarbeitung, Signalverarbeitung usw.

Die Spulen 5 können im Dauerbetrieb oder im Pulsbetrieb betrieben werden. Der Dauerbetrieb weist den Vorteil auf, dass das Bedienteil 2 auch ohne einen dafür vorgesehenen Energiespeicher im Dauerbetrieb betreibbar ist. Das Bedienteil 2 kann also insbesondere batterielos und akkumulatorlos sein.

Datenübertragungen sind in einer Variante durchführbar zwischen: der Versorgungseinheit 3 und dem mindestens einen Bedienteil 2, zwischen dem Bedienteil 2 und dem Kochgerät 1 und zwischen der Versorgungseinheit 3 und dem Kochgerät 1. Dazu können das Kochgerät 1, das Bedienteil 2 und die Versorgungseinheit 3 geeignete Sender, Empfänger und/oder Senderempfänger (Transceiver) aufweisen (o.Abb.).

Das Kochgerät 11 weist hier an einer oberseitigen Kochfeldplatte 17 vier unterschiedliche Kochzonen 12 bis 15 auf, wobei an der Kochzone 12 eine Warmhaltezone 16 zuschaltbar ist und beide Zonen 12 und 16 als ein gemeinsamer Warmhaltebereich nutzbar sind. Die Zonen 12 bis 16 sind beispielsweise durch Widerstandheizelemente oder indutiv über jeweilige Spulenbetreibbar.

Eine Datenübertragung zwischen der Versorgungseinheit 3 und dem mindestens einen Bedienteil 2 kann beispielsweise dazu verwendet werden, eine Signalübertragung zwischen diesen Einheiten 2, 3 zu optimieren, z.B. im Hinblick auf eine ausreichende Signalstärke des Wechselfelds zur Versorgung des mindestens einen Bedienteils 2.

Eine Datenübertragung zwischen dem Bedienteil 2 und dem Kochgerät 1 kann beispielsweise dazu verwendet werden, Steuersignale von dem Bedienteil 2 an das Kochgerät 1 zu senden und/oder Statusinformation von dem Kochgerät 1 an das Bedienteil 2 zu senden. Das Bedienteil 2 kann insbesondere Bedienelemente (Schalter, Taster, Schieber usw., auch virtuell über ein elektronisches Eingabefeld wie ein interaktives Display) zur Eingabe von Steuerinformation durch einen Bediener aufweisen. Das Bedienteil 2 mag mindestens eine Anzeigeeinheit (Display, Signalleuchte usw.) zur Darstellung von Information betreffend das Kochgerät 1 aufweisen.

Eine Datenübertragung zwischen der Versorgungseinheit 3 und dem mindestens einen Bedienteil 2 kann beispielsweise dazu verwendet werden, eine Betriebssicherheit zu erhöhen. So mag das Kochgerät 1 beispielsweise nur dann ein Steuersignal umsetzen, wenn die Versorgungseinheit 3 dem Kochgerät 1 gemeldet hat, dass es aktiv ist. So können z.B. durch ein Kanalübersprechen ungewollt empfangene Steuerbefehle zumindest teilweise ausgeschlossen werden.

Mindestens eine dieser Datenübertragungen kann auf der Grundlage einer Nahfeld-Funkübertragung durchgeführt werden. Dadurch wird ein Abstand zwischen den so miteinander Daten übertragenden Einheiten praktisch begrenzt, da ein Abstand, welcher größer ist als eine maximale Reichweite der Nahfeld-Funkübertragung, eine Zusammenarbeit dieser Einheiten verhindert. Als ein Vorteil ergibt sich, dass diese Einheiten folglich für einen korrekten Betrieb des Kochgeräts nahe beieinander bleiben müssen, was eine unüberwachte Bedienung des Kochgeräts verhindert.

Unter einer Nahfeld-Funkübertragung kann insbesondere eine Funkübertragung verstanden werden, welche maximal in einem Zentimeterbereich durchführbar ist, insbesondere von nicht mehr als ca. einem Meter, insbesondere von nicht mehr als fünfzig Zentimetern, insbesondere von nicht mehr als zehn Zentimetern, insbesondere von nicht mehr als fünf Zentimetern, insbesondere von nicht mehr als vier Zentimetern. Durch die Verwendung einer Funkübertragung wird erstens die Datenübertragung von der induktiven Energieübertragung entkoppelt, was eine besonders störungsfreie Datenübertragung ermöglicht. Durch die kurze Reichweite der Datenübertragung wird zudem die Wahrscheinlichkeit verringert, dass die Datenkommunikation andere Datenübertragungen stören kann.

Es ist eine Weiterbildung, dass die Nahfeld-Funkübertragung eine NFC-Datenübertragung ist. Unter einer NFC-Datenübertragung ("Near Field Communication") kann insbesondere die Datenübertragung gemäß dem NFC-Standard, insbesondere nach ISO-Normen, verstanden werden. Die maximale Reichweite der NFC-Datenübertragung beträgt insbesondere bis zu vier Zentimetern. Die NFC-Datenübertragung weist unter anderem den Vorteil auf, dass sie zuverlässig ist, einen nur geringen Bauraum benötigt und sich einfach realisieren lässt, z.B. mittels preiswerter Komponenten.

Zum Betrieb des Kochgeräts 1 mag dieses beispielsweise mittels eines Hauptschalters (o.Abb.) eingeschaltet werden. Dieses Einschalten mag auch die Versorgungseinheit 3 einschalten. Die Versorgungseinheit 3 und das Kochgerät 1 sind beispielsweise beide für einen Netzbetrieb ausgelegt. Dass die Versorgungseinheit 3 eingeschaltet und betriebsbereit ist, mag sie dem Kochgerät 1 beispielsweise mittels einer NFC-Kommunikation mitteilen. Die Versorgungseinheit 3 darf dazu maximal ca. vier Zentimeter von dem Kochgerät 1 entfernt sein. Die Versorgungseinheit 3 mag dazu randseitig insbesondere einen oder mehrerer NFC-Sender oder NFC-Senderempfänger aufweisen. Erst wenn die Versorgungseinheit 3 ihre Betriebsbereitschaft signalisiert hat, nimmt das Kochgerät 1 Steuersignale von dem Bedienteil 2 an und ist ab dann mittels des Bedienteils 2 bzw. der Bedieneinrichtung 2,3 bedienbar. Alternativ mag die Versorgungseinheit 3 mit dem Kochgerät 1 drahtgebunden verbunden sein, z.B. über ein Kabel mit einer Länge von nicht mehr als einem Meter.

Das Bedienteil 2 ist hier bevorzugt ohne einen zur Überbrückung von Pulspausen vorgesehenen Energiespeicher ausgerüstet und sollte zu ihrer Verwendung folglich auf die Aufsatzfläche 4 der Versorgungseinheit 3 abgesetzt sein und ist von dieser durch eine transformatorische oder induktive Kopplung versorgbar oder speisbar. Das Bedienteil 2 kann mit der Versorgungseinheit 3 über eine NFC-Funkverbindung kommunizieren. Damit dies auf allen Positionen der Aufsatzfläche 4 möglich ist, mag die Versorgungseinheit 3 mehrere NFC-Empfänger oder NFC-Senderempfänger aufweisen, die insbesondere über die Aufsatzfläche 4 verteilt angeordnet sind.

Das Bedienteil 2 kann bevorzugt eine Datenkommunikation mit dem Kochgerät 1 über eine Funkverbindung durchführen, welche eine beliebige Platzierung auf der Aufsatzfläche 4 erlaubt, insbesondere mit einer Reichweite von nicht mehr als einem Meter. Alternativ mag das Bedienteil 2 Steuersignale an die Versorgungseinheit 3 senden, welche Versorgungseinheit 3 sie an das Kochgerät 1 weiterleitet. Die Versorgungseinheit 3 kann also als eine Relaisstation, Router o.ä. verwendet werden. Umgekehrt mag das Kochgerät 1 Statussignale oder jegliche beliebige andere Information an das Bedienteil 2 direkt oder über die Versorgungseinheit 3 senden.

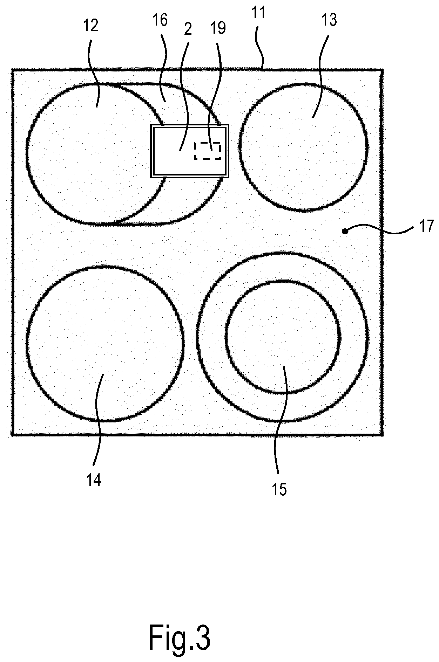

**Fig.3** skizziert in Draufsicht eine Anordnung mit einem Kochgerät in Form eines Induktionskochgeräts 11, einer darin integrierten Versorgungseinheit und einer darauf aufgelegten Bedieneinrichtung 2. Die Bedieneinrichtung 2 mag mit dem Induktionskochgerät 11 analog wie oben beschrieben zusammenwirken, wo anwendbar.

Das Induktionskochgerät 11 weist hier an einer oberseitigen Kochfeldplatte 17 vier unterschiedliche Kochzonen 12 bis 15 auf, wobei an der Kochzone 12 eine Warmhaltezone 16 zuschaltbar ist und beide Zonen 12 und 16 als ein gemeinsamer Warmhaltebereich nutzbar sind. Die Zonen 12 bis 16 sind mittels jeweils zugeordneter (unterhalb der Kochfeldplatte 17 angeordneter) Spulen (o.Abb.) betreibbar. Diese Spulen können als Spulen analog zu den Spulen 5 der Versorgungseinheit 3 verwendet werden. Die Auflagefläche 4 wird hier durch die Zonen 12 bis 16 der Kochfeldplatte 7 gebildet.

Das Induktionskochgerät 11 mag für eine Aufsatzerkennung an jeder der Kochzonen 12 bis 15 oder jeder der Zonen 12 bis 16 Suchpulse abgeben. Die Suchpulse mögen bereits zum Betrieb des Bedienteils 2 ausreichen, insbesondere falls dieses einen Energiespeicher zur Überbrückung der Pulspausen aufweist. In einer Variante mögen die Suchpulse bei Erkennen des Bedienteils 2 so verändert werden, dass sich eine höhere Zeitdauer, Stärke oder Frequenz der Pulse und folglich eine höhere zeitlich gemittelte Energieübertragung einstellt. In einer anderen Variante mag die jeweilige Spule auf einen Dauerbetrieb umgestellt werden, was insbesondere auch den Betrieb eines Bedienteils 2 ohne dedizierten Energiespeicher ermöglicht.

Zu seinem Betrieb wird das Bedienteil 2 auf einer freien Zone 12 bis 16 abgelegt. Das Induktionskochgerät 11 mag zur Kommunikation mit dem Bedienteil 2 unterhalb der Kochfeldplatte 17, insbesondere unterhalb der Zone 12 bis 16, einen oder mehrere NFC-Empfänger oder NFC-Senderempfänger aufweisen.

Um zu verhindern, dass das Bedienteil 2 durch eine noch heiße Zone 12 bis 16 beschädigt oder sogar zerstört wird, weist das Bedienteil 2 eine Temperatursensorik 19 auf, insbesondere an einer Kontaktfläche oder Fußfläche des Bedienteils 2. So kann das Bedienteil 2 feststellen, ob es auf eine freie, aber noch heiße Kochzone 12 bis 16 aufgesetzt worden ist. Das Bedienteil 2 mag folgend eine Aktion ausführen, z.B. ein optisches und/oder akustisches Warnsignal ausgeben oder an das Induktionskochgerät 11 ein Steuersignal ausgeben, damit das Induktionskochgerät 11 ein optisches und/oder akustisches Warnsignal ausgibt.

Alternativ oder zusätzlich mag das Induktionskochgerät 11 dazu eingerichtet sein, für die Kochzone 12 bis 16, auf welche das Bedienteil 2 aufgesetzt ist, eine Restwärme zu bestimmen und bei einem Erreichen oder Überschreiten eines vorbestimmten Schwellwerts der Restwärme mindestens eine Aktion auszulösen, z.B. ein optisches und/oder akustisches Warnsignal auszugeben.

Das Haushaltsgerät mag insbesondere ein anderes Kochgerät sein oder mag auch ein anderes Haushaltsgerät sein, z.B. ein Elektrogroßgerät wie ein Wäschebehandlungsgerät, ein Kühlgerät usw. oder auch ein Elektrokleigerät wie ein Toaster, eine Kaffeemaschine usw.
Auch ist die Nahfeld-Funkkommunikation nicht auf eine NCF-Kommunikation beschränkt, sondern kann z.B. auch Bluetooth, Piconet usw. umfassen.

### Bezuaszeichenliste

- 1: Kochgerät
- 2: Bedienteil
- 3: Versorgungseinheit
- 4: Aufsatzfläche
- 5: Spule
- 6: Steuereinrichtung
- 11: Induktionskochgerät
- 12: Kochzone
- 13: Kochzone
- 14: Kochzone
- 15: Kochzone
- 16: Warmhaltezone
- 17: Kochfeldplatte
- 19: Temperatursensorik

## Patentansprüche

1. Anordnung (1, 2, 3), umfassend ein Haushaltsgerät (1) und eine Bedieneinrichtung (2, 3) für mindestens dieses Haushaltsgerät (1), wobei
- die Bedieneinrichtung (2, 3) mindestens ein induktiv versorgbares Bedienteil (2) aufweist,
- das Bedienteil (2) auf einer Aufsatzfläche (4) variabel positionierbar ist,
- zwischen dem Bedienteil (2) und dem Haushaltsgerät (1) eine Datenübertragung durchführbar ist,
- das Haushaltsgerät (1) mittels der Bedieneinrichtung (2, 3) bedienbar ist und
- zwischen der Versorgungseinheit (3) und dem mindestens einen Bedienteil (2) eine Datenübertragung auf der Grundlage einer Nahfeld-Funkübertragung durchführbar ist,
**dadurch gekennzeichnet, dass**
- die Bedieneinrichtung (2, 3) eine zu dem Haushaltsgerät (1) entfernt anordenbare induktive Versorgungseinheit (3) mit der Aufsatzfläche (4) für das mindestens eine Bedienteil (2) aufweist, wobei das Bedienteil (2) mittels der Versorgungseinheit (3) durch induktiven Energieübertrag versorgbar ist, wenn es auf der Aufsatzfläche (4) aufgesetzt ist,
- und dass
- zwischen der Versorgungseinheit (3) und dem Haushaltsgerät (1) eine Datenübertragung auf der Grundlage einer Nahfeld-Funkübertragung durchführbar ist.

2. Anordnung (1, 2, 3) nach Anspruch 1, **dadurch gekennzeichnet, dass** die Versorgungseinheit (3) ein Spulenfeld mit mehreren, insbesondere unterhalb der Aufsatzfläche (4), dicht angeordneten Spulen (5) aufweist.

3. Anordnung (1, 2, 3) nach einem der vorhergehenden Ansprüche, **dadurch gekennzeichnet, dass** die Versorgungseinheit (3) dazu eingerichtet ist, das mindestens eine Bedienteils (2) mittels eines Dauerbetriebs mindestens einer in der Versorgungseinheit (3) vorhandenen Spule (5) induktiv zu versorgen.

4. Anordnung (1, 2, 3) nach einem der vorhergehenden Ansprüche, **dadurch gekennzeichnet, dass** die Versorgungseinheit (3) dazu eingerichtet ist, das mindestens eine Bedienteil (2) mittels eines Pulsbetriebs mindestens einer in der Versorgungseinheit (3) vorhandenen Spule (5) induktiv zu versorgen, und das Bedienteil (2) mit mindestens einem Energiespeicher ausgerüstet ist, der das Bedienteil (2) zwischen zwei Pulsen betreibbar hält.

5. Anordnung (1, 2, 3) nach einen der vorhergehenden Ansprüche, **dadurch gekennzeichnet, dass** das Bedienteil (2) dazu eingerichtet ist, der Versorgungseinheit (3) seine angeschalteten elektrischen Verbraucher oder deren Soll- oder Mindestlast zu melden, und die Versorgungseinheit (3) dazu eingerichtet ist, einen Signalpegel daran anzupassen.

6. Anordnung (1, 2, 3) nach einen der vorhergehenden Ansprüche, **dadurch gekennzeichnet, dass** zwischen der Versorgungseinheit (3) und dem mindestens einen Bedienteil (2) eine die Datenübertragung auf der Grundlage einer Kommunikation nach dem NFC-Nahfeldkommunikationsstandard durchführbar ist.

7. Anordnung (1, 2, 3) nach einem der vorhergehenden Ansprüche, **dadurch gekennzeichnet, dass** zwischen dem Bedienteil (2) und dem Haushaltsgerät (1) eine Datenübertragung auf der Grundlage einer Nahfeld-Funkübertragung, insbesondere Kommunikation nach dem NFC-Nahfeldkommunikationsstandard, durchführbar ist.

8. Anordnung (1, 2, 3) nach einem der vorhergehenden Ansprüche, **dadurch gekennzeichnet, dass** die Versorgungseinheit (3) von dem durch das Bedienteil (2) zu bedienenden Haushaltsgerät (1) entfernt anordenbar ist.

9. Anordnung (1, 2, 3) nach einem der vorhergehenden Ansprüche, **dadurch gekennzeichnet, dass** zwischen der Versorgungseinheit (3) und dem Haushaltsgerät (1) eine Datenübertragung auf der Grundlage einer NFC-Kommunikation durchführbar ist.

10. Anordnung (1, 2, 3) nach einem der vorhergehenden Ansprüche, **dadurch gekennzeichnet, dass** das Bedienteil (2) batterielos und akkumulatorlos ist.

## Claims

1. Arrangement (1, 2, 3) comprising a household appliance (1) and an operating device (2, 3) for at least this household appliance (1), wherein
- the operating device (2, 3) has at least one inductively suppliable operating part (2),
- the operating part (2) can be positioned variably on a set-down surface (4),
- a data transmission can be carried out between the operating part (2) and the household appliance (1),
- the household appliance (1) can be operated by means of the operating device (2, 3) and
- a data transmission based on a near field radio transmission can be carried out between the supply unit (3) and the at least one operating part (2),
**characterised in that**
- the operating device (2, 3) has an inductive supply unit (3) which can be arranged remote from the household appliance (1), with a set-down surface (4) for the at least one operating part (2), wherein the operating part (2) can be supplied by means of the supply unit (3) through inductive power transmission when it is placed on the set-down surface (4),
- and that
- a data transmission based on a near field radio transmission can be carried out between the supply unit (3) and the household appliance (1).

2. Arrangement (1, 2, 3) according to claim 1, **characterised in that** the supply unit (3) has a coil field with a number of coils arranged closely (5), in particular below the set-down surface (4).

3. Arrangement (1, 2, 3) according to one of the preceding claims, **characterised in that** the supply unit (3) is configured to inductively supply at least one operating part (2) by means of permanent operation of at least one coil (5) present in the supply unit (3).

4. Arrangement (1, 2, 3) according to one of the preceding claims, **characterised in that** the supply unit (3) is configured to inductively supply the at least one operating part (2) by means of a pulsed operation of at least one coil (5) present in the supply unit (3), and the operating part (2) is equipped with at least one energy store, which keeps the operating part (2) operable between two pulses.

5. Arrangement (1, 2, 3) according to one of the preceding claims, **characterised in that** the operating part (2) is configured to notify the supply unit (3) of its connected electrical load or its target or minimum load, and the supply unit (3) is configured to adjust a signal level thereto.

6. Arrangement (1, 2, 3) according to one of the preceding claims, **characterised in that** a data transmission based on a communication according to the NFC near field communication standard can be carried out between the supply unit (3) and the at least one operating part (2).

7. Arrangement (1, 2, 3) according to one of the preceding claims, **characterised in that** a data transmission based on a near field radio transmission, in particular communication according to the NFC near field communication standard, can be carried out between the operating part (2) and the household appliance (1).

8. Arrangement (1, 2, 3) according to one of the preceding claims, **characterised in that** the supply unit (3) can be arranged remote from the household appliance (1) to be operated by the operating part (2).

9. Arrangement (1, 2, 3) according to one of the preceding claims, **characterised in that** a data transmission based on an NFC communication can be carried out between the supply unit (3) and the household appliance (1).

10. Arrangement (1, 2, 3) according to one of the preceding claims, **characterised in that** the operating part (2) is battery-free and accumulator-free.

## Revendications

1. Agencement (1, 2, 3) comprenant un appareil ménager (1) et un dispositif de commande (2, 3) pour au moins cet appareil ménager (1),
- le dispositif de commande (2, 3) présentant au moins une partie de commande (2) pouvant être alimentée de manière inductive,
- la partie de commande (2) étant positionnable de manière variable sur une surface de pose (4),
- une transmission de données étant réalisable entre la partie de commande (2) et l'appareil ménager (1),
- l'appareil ménager (1) étant commandable au moyen du dispositif de commande (2, 3), et
- une transmission de données entre l'unité d'alimentation (3) et l'au moins une partie de commande (2) étant réalisable sur la base d'une transmission radio de champ proche,
**caractérisé en ce que**
- le dispositif de commande (2, 3) présente une unité d'alimentation (3) inductive pouvant être disposée de manière éloignée de l'appareil ménager (1), avec la surface de pose (4) pour l'au moins une partie de commande (2), la partie de commande (2) pouvant être alimentée par transfert d'énergie inductif au moyen de l'unité d'alimentation (3) lorsqu'elle est posée sur la surface de pose (4),
- et **en ce qu'**
- entre l'unité d'alimentation (3) et l'appareil ménager (1), une transmission de données est réalisable sur la base d'une transmission radio de champ proche.

2. Agencement (1, 2 3) selon la revendication 1, **caractérisé en ce que** l'unité d'alimentation (3) présente un champ de bobine comprenant plusieurs bobines (5) disposées côte à côte, notamment en dessous de la surface de pose (4).

3. Agencement (1, 2 3) selon l'une quelconque des revendications précédentes, **caractérisé en ce que** l'unité d'alimentation (3) est configurée pour alimenter l'au moins une partie de commande (2) de manière inductive au moyen d'un fonctionnement continu d'au moins une bobine (5) présente dans l'unité d'alimentation (3).

4. Agencement (1, 2 3) selon l'une quelconque des revendications précédentes, **caractérisé en ce que** l'unité d'alimentation (3) est configurée pour alimenter l'au moins une partie de commande (2) de manière inductive au moyen d'un fonctionnement pulsé d'au moins une bobine (5) présente dans l'unité d'alimentation (3), et **en ce que** la partie de commande (2) est équipée d'au moins un accumulateur d'énergie qui maintient la partie de commande (2) de manière exploitable entre deux impulsions.

5. Agencement (1, 2 3) selon l'une quelconque des revendications précédentes, **caractérisé en ce que** la partie de commande (2) est configurée pour communiquer à l'unité d'alimentation (3) ses consommateurs électriques connectés ou sa charge minimale ou théorique, et **en ce que** l'unité d'alimentation (3) est configurée pour y adapter un niveau de signal.

6. Agencement (1, 2 3) selon l'une quelconque des revendications précédentes, **caractérisé en ce qu'**entre l'unité d'alimentation (3) et l'au moins une partie de commande (2), la transmission de données sur la base d'une communication suivant la norme de communication de champ proche NFC est réalisable.

7. Agencement (1, 2 3) selon l'une quelconque des revendications précédentes, **caractérisé en ce qu'**entre la partie de commande (2) et l'appareil ménager (1), une transmission de données sur la base d'une transmission radio de champ proche, notamment une communication suivant la norme de communication de champ proche NFC, est réalisable.

8. Agencement (1, 2 3) selon l'une quelconque des revendications précédentes, **caractérisé en ce que** l'unité d'alimentation (3) peut être disposée de manière éloignée de l'appareil ménager (1) à commander par la partie de commande (2).

9. Agencement (1, 2 3) selon l'une quelconque des revendications précédentes, **caractérisé en ce qu'**entre l'unité d'alimentation (3) et l'appareil ménager (1), une transmission de données sur la base d'une communication NFC est réalisable.

10. Agencement (1, 2 3) selon l'une quelconque des revendications précédentes, **caractérisé en ce que** la partie de commande (2) est exempte de batteries et est exempte d'accumulateurs.
